# EUROPEAN PATENT APPLICATION

(11) **EP 3 214 107 A1**
(43) Date of publication of application: **06.09.2017**
(21) Application number: 15854255.5
(22) Date of filing: 22.05.2015
(51) Int. Cl.: C08G 63/16, C08G 63/78, C08G 63/82, C08G 63/47

(54) **METHOD FOR PRODUCING BIODEGRADABLE POLYESTER RESIN AND BIODEGRADABLE RESIN PRODUCED THEREFROM**

(30) Priority: 29.10.2014 KR 20140148269
(71) Applicant: LOTTE Fine Chemical Co., Ltd., Ulsan, 44714 (KR)
(72) Inventor: KIM, Ye Jin, Seoul 130-100 (KR); YUN, Ki Chull, Suwon-si Gyeonggi-do 443-817 (KR); KANG, Gyung Don, Daejeon 305-768 (KR); AHN, Ji Soo, Daejeon 305-744 (KR); KANG, Sang Mi, Daejeon 302-829 (KR); KIM, Min Kyoung, Seoul 158-755 (KR); YANG, Mi Hwa, Miryang-si Gyeongsangnam-do 627-805 (KR); BYUN, Kil Seuk, Yongin-si Gyeonggi-do 448-519 (KR)
(74) Representative: Kador & Partner
(86) International application number: PCT/KR2015/005150
(87) International publication number: WO 2016/068433

(57) **Abstract**

The present invention relates to a method for using a combination of two kinds of thermal stabilizers in a production process in order to improve the thermal stability of biodegradable polyester resins, and to biodegradable polyester resin produced therefrom. In said method, two kinds of thermal stabilizers improve thermal stability by acting complementarily with each other. Thus, a high temperature reaction is possible, and due to an increase in the reactivity, the reaction time is shortened and the molecular weight is increased. In addition, the obtained resin can provide high quality products, since the acid value thereof is reduced to improve the hydrolysis resistance thereof, and the chromaticity thereof is enhanced to thereby be capable of preventing a yellowing phenomenon of the final product.

## Description

### [Technical Field]

The present invention relates to a method of preparing a biodegradable polyester resin, and provides a method of enhancing thermal stability of the resin and improving chromaticity and an acid value of the resin by process conditions such as a combination of a thermal stabilizer, a catalyst used therewith, a reaction temperature, etc., and a resin prepared therefrom.

### [Background Art]

Among biodegradable resins, a polybutylene aliphatic/aromatic copolyester includes a diol residue component derived from 1,4-butanediol and a dicarboxylic acid residue component derived from an aliphatic dicarboxylic acid or an aromatic dicarboxylic acid. Poly(butylene succinate-co-adipate-co-terephthalate) (PBSAT), which is prepared using, as a base material, 1,4-butanediol, succinic acid and adipic acid as the aliphatic dicarboxylic acids, and dimethyl terephthalate as the aromatic dicarboxylic acid, is a representative example. A process of preparing a polybutylene aliphatic/aromatic copolyester such as PBSAT is divided into forming oligomers through an esterification reaction and increasing a molecular weight by polycondensing the oligomers. In the above process, various additives may be used to aid the progress of the reaction and enhance properties of a resin to be prepared. In this case, a catalyst and a thermal stabilizer are representative additives.

Particularly, the process of preparing a copolyester includes performing a polycondensation reaction at high temperature in a vacuum. In order to stably prepare a resin and enhance reactivity under this reaction condition, it is important to allow the reaction to be performed at high temperature by improving thermal stability.

Therefore, the development of a new process of preparing a resin for improving thermal stability of a biodegradable polyester resin and quality of a final product is necessary.

Meanwhile, in a conventional process of preparing a biodegradable polyester resin, a phosphate-based compound such as triphenyl phosphate and the like is used as a thermal stabilizer. However, although this thermal stabilizer is used, the above described requirements are not satisfied and also problems are not completely solved.

### [Disclosure]

### [Technical Problem]

It is an objective of the present invention to provide a preparation process for enhancing thermal stability of a polybutylene aliphatic/aromatic copolyester resin. Specifically, the present invention provides a method of enhancing reactivity by allowing a high temperature reaction in a process of preparing a resin. Also, the present invention provides a resin having enhanced hydrolysis resistance and capable of preventing a yellowing phenomenon of the final product.

### [Technical Solution]

The present invention provides a method of preparing a biodegradable resin, which includes esterifying 1,4-butanediol and one or more dicarboxylic acids selected from the group consisting of terephthalic acid (TA) or a derivative thereof and an aliphatic dicarboxylic acid having a backbone consisting of 2 to 6 carbon atoms by using a thermal stabilizer in which one or more compounds selected from a first group consisting of phosphate-based compounds and one or more compounds selected from a second group consisting of phosphite-based compounds and an acrylate-based compound are combined, and polycondensing a product of the esterification reaction.

Preferably, the first group includes triphenyl phosphate, trimethyl phosphate, triethyl phosphate, isopropyl acid phosphate, diisopropyl acid phosphate, butyl acid phosphate, octyl acid phosphate, dioctyl acid phosphate, isodecyl acid phosphate, diisodecyl acid phosphate, tridecanol acid phosphate, and bis(tridecanol acid)phosphate.

Preferably, the second group includes triphenyl phosphite, trimethyl phosphite, triethyl phosphite, diphenyl decyl phosphite, phenyl didecyl phosphite, diphenyl dodecyl phosphite, trinonyl phenyl phosphite, diphenyl isooctyl phosphite, tributyl phosphite, tripropyl phosphite, tris(monodecyl phosphite), tris(monophenyl)phosphite, and ethyl 2-cyano-3,3-diphenylacrylate.

Preferably, the thermal stabilizer is included in the reaction in an amount ranging from 100 to 3000 ppm with respect to the total weight of a final resin.

Preferably, in the esterification reaction, a catalyst selected from the group consisting of magnesium acetate, stannous acetate, tetra-n-butyl titanate, lead acetate, sodium acetate, potassium acetate, antimony trioxide, N,N-dimethylaminopyridine, N-methylimidazole, and a combination thereof is included in an amount ranging from 50 to 2500 ppm with respect to the total weight of a final resin.

Preferably, the aliphatic dicarboxylic acid is succinic acid (SA) or adipic acid (AA).

Preferably, the compound of the first group and the compound of the second group are used in a range of a weight ratio of 1:0.5 to 1:3.

Preferably, the polycondensation reaction is performed at a temperature range of 255 to 275 °C for 1.5 to 2.5 hours.

The present invention provides a biodegradable polymer resin prepared by the above method.

Preferably, the polymer resin has an acid value of greater than 0 mg KOH/g and less than 2 mg KOH/g.

Preferably, the polymer resin has a chromaticity value b of equal to or greater than 0 and less than 5.

Preferably, the polymer resin has a molecular weight (Mw) in a range of 120,000 to 250,000.

### [Advantageous Effects]

The present invention can provide a biodegradable resin having enhanced thermal stability by using a combination of two types of thermal stabilizers, which exhibit mutually complementary effects, in a process of preparing a biodegradable polyester resin. In addition, the resin according to the present invention is stable due to improved hydrolysis resistance, and when a final product is implemented, discoloration of the final product, a so-called yellowing phenomenon, can be improved. Furthermore, reaction time can be shortened due to an increase in reactivity in polycondensation in the process of preparing a resin, and a molecular weight can also be increased.

### [Modes of the Invention]

The present invention relates to a method of preparing a polybutylene aliphatic/aromatic copolyester as a biodegradable resin, and is technically characterized by using a combination of two types of thermal stabilizers as an additive used in the reaction. Therefore, effects of enhancing thermal stability of a resin and reactivity in polycondensation, and improving chromaticity and an acid value are brought.

A process of preparing a resin according to the present invention includes esterifying 1,4-butanediol and one or more dicarboxylic acids selected from the group consisting of terephthalic acid (TA) or a derivative thereof and an aliphatic dicarboxylic acid having a backbone consisting of 2 to 6 carbon atoms by using a thermal stabilizer in which one or more compounds selected from a first group consisting of phosphate-based compounds and one or more compounds selected from a second group consisting of phosphite-based compounds and an acrylate-based compound are combined, and polycondensing a product of the esterification reaction.

The two types of thermal stabilizers refer to two types of compounds selected from the first group and the second group. In this case, since one or more compounds may be selected from each group, three or four or more compounds may be used together as an overall thermal stabilizer.

An example of a phosphate-based compound of the first group may include triphenyl phosphate, trimethyl phosphate, triethyl phosphate, isopropyl acid phosphate, diisopropyl acid phosphate, butyl acid phosphate, octyl acid phosphate, dioctyl acid phosphate, isodecyl acid phosphate, diisodecyl acid phosphate, tridecanol acid phosphate, and bis(tridecanol acid)phosphate, etc., but is not limited thereto. An example of a phosphite-based compound of the second group may include triphenyl phosphite, trimethyl phosphite, triethyl phosphite, diphenyl decyl phosphite, phenyl didecyl phosphite, diphenyl dodecyl phosphite, trinoryl phenyl phosphite, diphenyl isooctyl phosphite, tributyl phosphite, tripropyl phosphite, tris(monodecyl phosphite), tris(monophenyl)phosphite, etc., and also an example of a acrylate-based compound of the second group may include ethyl 2-cyano-3,3-diphenylacrylate.

As such, a combination of one or more compounds respectively selected from the groups consisting of two different types of compounds is used as a thermal stabilizer because two types of compounds can act to be mutually complementary due to a difference in effects implemented by a compound of each group. Specifically, the compound of the first group is related to a chromaticity improvement effect of a final prepared resin and the compound of the second group is related to an effect of enhancing hydrolysis resistance by lowering an acid value of the resin. Therefore, when the compound of the first group is used alone, color is good but hydrolysis resistance is degraded by an increase in an acid value. Also, when a phosphite-based compound of the second group is used alone, an acid value is good but a degree of polymerization is decreased and a chromaticity value b is greatly increased, thereby preparing a polymer that is difficult to be commercially used. When an acrylate-based compound of the second group is used alone, a degree of polymerization is good but a chromaticity value b is greatly increased, thereby preparing a polymer having low marketability.

The compounds of the first group and the second group are preferably used in a range of a weight ratio of 1:0.5 to 1:3. When the compounds are used in the above range of a weight ratio, the use of each compound can exhibit sufficient effects, and an effect of improving thermal stability is also significantly exhibited, compared to the use of each compound alone. In addition, when compounds of the first group and the second group are used together, an effect of enhancing reactivity in the polycondensation reaction is exhibited. Therefore, reaction time is shortened and a molecular weight of a final obtained resin increases.

The thermal stabilizer is included in the reaction in an amount ranging from 100 to 3000 ppm with respect to the total weight of a final resin. This is because when an amount of a thermal stabilizer added is less than 100 ppm, the polymer resin may not be sufficiently stabilized at high temperature upon the polycondensation reaction, and as a result, the color of the polymer resin may become yellow, and hydrolysis resistance is also degraded due to a high acid value. On the other hand, when an amount of a thermal stabilizer added is greater than 3000 ppm, a problem in which the polymer resin fails to reach the desired high degree of polymerization due to a decrease in catalytic activity occurs.

Meanwhile, in the esterification reaction, reaction may be progressed by further adding a catalyst as well as the combined thermal stabilizer for enhancing reactivity. In this case, magnesium acetate, stannous acetate, tetra-n-butyl titanate, lead acetate, sodium acetate, potassium acetate, antimony trioxide, N,N-dimethylaminopyridine, N-methylimidazole, or a combination thereof may be used as a catalyst. Also, the catalyst is preferably used in an amount ranging from 50 to 2500 ppm with respect to the total weight of a final resin.

In addition, in the reaction, a compound having three or more groups capable of forming an ester bond or an amide bond, which are selected among a carboxyl group, a hydroxyl group, and an amine group may be used as a branching agent. Specifically, trimellitic acid, citric acid, malic acid, glycerol, a monosaccharide, a disaccharide, a dextrin, or reduced sugar may be used as the branching agent. Also, the reaction may be performed by further adding a coloring agent such as cobalt acetate and the like as well as a branching agent. The branching agent and coloring agent are preferably used in amounts ranging from 250 to 2500 ppm and from 50 to 2500 ppm, respectively, with respect to the total weight of a final resin.

Next, the polycondensation reaction is preferably performed at a temperature range of 255 to 275 °C for 1.5 to 2.5 hours. This reaction temperature is higher and this reaction time is shortened, compared to those of a common polyester resin. That is, when the combined thermal stabilizer according to the present invention is used, a process is easily performed due to enhanced reactivity and a molecular weight of a resulting resin increases. Meanwhile, the polycondensation reaction is preferably performed at a pressure of 1 Torr or less.

A final resin obtained through the polycondensation reaction according to the present invention is limited to a resin having a molecular weight (Mw) in a range of 120,000 to 250,000. However, this limitation merely roughly indicates the range of a molecular weight of the resin obtained by using the thermal stabilizer according to the present invention. Therefore, it should be understood that a resin is encompassed within the scope of the present invention without limitation as long as the resin prepared by using the thermal stabilizer according to the present invention has an increased molecular weight.

In addition, the resin prepared by the method according to the present invention may be preferably limited to a resin having an acid value of greater than 0 mg KOH/g and less than 2 mg KOH/g and a chromaticity value b of 0 or more and less than 5. A resin having an acid value and a chromaticity value b in the above ranges exhibits effects of improving hydrolysis resistance and preventing a yellowing phenomenon of the final product. However, the above range is limited only for specifically representing properties improved by using the combined thermal stabilizer. Therefore, it should be understood that a resin is encompassed within the scope of the present invention without limitation as long as the resin prepared by using the combined thermal stabilizer has an improved property.

Meanwhile, the esterification reaction may be progressed by adding 1,4-butanediol and a dicarboxylic acid selected from the group consisting of terephthalic acid (TA) or a derivative thereof and an aliphatic dicarboxylic acid having a backbone consisting of 2 to 6 carbon atoms at a molar ratio of 1 to 1.5 according to the order of a common esterification reaction. Oligomers having an ester bond are obtained by the esterification reaction, and the oligomers are polycondensed to prepare a biodegradable polyester resin.

Particularly, dimethyl terephthalate (DMT) may be preferably used as the terephthalic acid or a derivative thereof.

In addition, a compound represented by the following Chemical Formula 1 in which n is 2 to 6 may be preferably used as the aliphatic dicarboxylic acid.

[Chemical Formula 1] **HOOC-(CH₂)ₙ-COOH**

Particularly, succinic acid and adipic acid may be preferably used.

In a process of preparing a resin according to the present invention, one or more compounds selected from the group consisting of terephthalic acid or a derivative thereof and an aliphatic dicarboxylic acid may be used as a dicarboxylic acid that is esterified with 1,4-butanediol.

In an example, when succinic acid and adipic acid as aliphatic dicarboxylic acids are used together with terephthalic acid or a derivative thereof, usage amounts of succinic acid, adipic acid, and terephthalic acid or a derivative thereof may be 0.7 to 0.994 mol, 0.005 to 0.299 mol, and 0.001 to 0.295 mol, respectively, based on 1 mol of total dicarboxylic acids.

Hydrolysis resistance of a resin thus obtained is enhanced and thus the resin is desirable in terms of change according to an elapsed time. Also, chromaticity of the resin is improved and thus a yellowing phenomenon of the final product may be prevented. As a result, a high-quality product may be provided.

Hereinafter, the present invention will be described with reference to examples. However, these are only provided to help understanding of the present invention and the present invention is not limited thereto.

### Examples 1 to 5 and Comparative Examples 1 to 4

1,4-butanediol (BOD), dimethyl terephthalate (DMT), tetra-n-butyl titanate (TBT; primary catalyst) as a catalyst, malic acid (MA) as a branching agent, and two or more selected from triphenyl phosphate (thermal stabilizer 1), trimethyl phosphate (thermal stabilizer 2), triphenyl phosphite (thermal stabilizer 3), and ethyl 2-cyano-3,3-diphenylacrylate (thermal stabilizer 4) as thermal stabilizers were added to a 500 ml reactor equipped with a stirrer and an outlet condenser in amounts given in the following Table 1 to prepare a mixture. Then, the temperature of the mixture was raised to 200 °C, and the mixture was reacted with stirring under a nitrogen atmosphere until methanol was released in an amount corresponding to 90% or more of a theoretical value. At this time, the released methanol was completely discharged out of system through the condenser. After the reaction was completed, succinic acid (SA) and adipic acid (AA) were added to the three-neck round-bottom flask in amounts given in Table 1. Then, the temperature of a mixture was raised to 200 °C, and the mixture was reacted with stirring until water was released in an amount corresponding to 90% or more of a theoretical value. At this time, the released water was discharged out of system through the condenser. Afterward, tetra-n-butyl titanate (TBT; secondary catalyst) and cobalt acetate (CA) as a coloring agent were added to the three-neck round-bottom flask in amounts given in Table 1 and then stirred for 5 minutes.

For polycondensing a product produced through the esterification reaction, an internal temperature was raised to 265 °C and a pressure was gradually decreased to 1 Torr or less. The reaction was progressed in a vacuum for 2 hours, and then the content in the flask was discharged to obtain a final resin.

**[Table 1]**

| Base material | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Diol | BDO | 108.14 (1.2) | 108.14(1.2) | 108.14(1.2) | 108.14(1.2) | 108.14(1.2) | 108.14(1.2) | 108.14(1.2) | 108.14(1.2) | 108.14(1.2) |
| Dicarboxylic acid | SA | 118.09 (1.0) | | 106.28(0.9) | 106.28(0.9) | 106.28(0.9) | 106.28(0.9) | 106.28(0.9) | 106.28(0.9) | 106.28(0.9) |
| | AA | | 76(0.52) | 7.31(0.05) | 7.31(0.05) | 7.31(0.05) | 7.31(0.05) | 7.31(0.05) | 7.31(0.05) | 7.31(0.05) |
| | DMT | | 93.2(0.48) | 9.71(0.05) | 9.71(0.05) | 9.71(0.05) | 9.71(0.05) | 9.71(0.05) | 9.71(0.05) | 9.71(0.05) |
| Branching agent | | 0.15 | 0.15 | 0.15 | 0.15 | 0.15 | 0.15 | 0.15 | 0.15 | 0.15 |
| Thermal stabilizer 1 | | 0.01 | 0.1 | 0.05 | 0.2 | 0.05 | 0.3 | | | |
| Thermal stabilizer 2 | | 0.05 | | | | 0.1 | | 0.3 | | |
| Thermal stabilizer 3 | | 0.15 | | 0.05 | 0.05 | | | | 0.3 | |
| Thermal stabilizer 4 | | | 0.05 | | 0.3 | 0.15 | | | | 0.3 |
| Primary catalyst | | 0.1 | 0.1 | 0.1 | 0.1 | 0.1 | 0.1 | 0.1 | 0.1 | 0.1 |
| Secondary catalyst | | 0.1 | 0.1 | 0.1 | 0.1 | 0.1 | 0.1 | 0.1 | 0.1 | 0.1 |
| Coloring agent | | 0.4 | 0.4 | 0.4 | 0.4 | 0.4 | 0.4 | 0.4 | 0.4 | 0.4 |

In Table 1, an amount of each compound is indicated in g and a calculated value denoted in parentheses indicates a mole number.

A molecular weight, an acid value, and chromaticity of resins according to examples and comparative examples were measured, results of which are shown in the following Table 2.

**[Table 2]**

| | Molecular weight (Mw) | Acid value (mg KOH/g) | Chromaticity (b value) |
|---|---|---|---|
| Example 1 | 197000 | 1.3 | 2.5 |
| Example 2 | 145000 | 1.5 | 3.4 |
| Example 3 | 176000 | 1.1 | 2.8 |
| Example 4 | 182000 | 0.8 | 3.2 |
| Example 5 | 192000 | 1.2 | 3.2 |
| Comparative Example 1 | 168000 | 3.5 | 2.7 |
| Comparative Example 2 | 162000 | 3.2 | 2.8 |
| Comparative Example 3 | 17100 | 1.1 | 14 |
| Comparative Example 4 | 188000 | 0.8 | 17 |

### Measurement method

### (1) Acid value

0.5 g of the resin was dissolved in 20 ml of chloroform and ethanol was then added to a resulting solution. The mixed solution was titrated with 0.1 N KOH in an autotitrator and an acid value was then calculated.

### (2) Chromaticity

In order to determine color of the resin, a chromaticity value b was measured using a colorimeter (SpectraMagic NX commercially available from Konica Minolta, Inc.). A chromaticity value b is defined as follows.

A chromaticity value b is represented by yellow or blue values. When a "b" value is a positive number (+), yellow is exhibited and when a "b" value is a negative number (-), blue is exhibited.

Therefore, as a chromaticity value b is close to 0, color is good.

As shown in Table 2, a high acid value of higher than 3 was exhibited in Comparative Examples 1 and 2 in which only the thermal stabilizer of the first group is used, and a high chromaticity value b of higher than 10 was exhibited in Comparative Examples 3 and 4 in which only the thermal stabilizer of the second group is used. On the other hand, the resins according to Examples 1 to 5 have an acid value and a chromaticity value b within the range according to the present invention.

Meanwhile, it can be seen that in terms of a molecular weight, the resins prepared in the examples are enhanced, compared to the resins prepared in the comparative examples except for Example 2 and Comparative Example 4. This is because reactivity, which is directly related to a molecular weight, may be changed depending on a type and content of a catalyst, the degree of vacuum, and equipment as well as a thermal stabilizer.

Therefore, an effect of a thermal stabilizer may be easily verified through chromaticity and an acid value. This is because as thermal stability is decreased upon a reaction, the resin becomes yellowish (brownish in severe cases), and an acid value increases due to destruction of an ester bond. Thus, it can be seen through comparison of resins prepared in the examples and comparative examples that resins prepared in the examples have improved properties due to the use of a thermal stabilizer.

## Claims

1. A method of preparing a biodegradable resin, comprising:
esterifying 1,4-butanediol and one or more dicarboxylic acids selected from the group consisting of terephthalic acid (TA) or a derivative thereof and an aliphatic dicarboxylic acid having a backbone consisting of 2 to 6 carbon atoms by using a thermal stabilizer in which one or more compounds selected from a first group consisting of phosphate-based compounds and one or more compounds selected from a second group consisting of phosphite-based compounds and an acrylate-based compound are combined; and
polycondensing a product of the esterification reaction.

2. The method of preparing a biodegradable resin according to claim 1, wherein the first group includes triphenyl phosphate, trimethyl phosphate, triethyl phosphate, isopropyl acid phosphate, diisopropyl acid phosphate, butyl acid phosphate, octyl acid phosphate, dioctyl acid phosphate, isodecyl acid phosphate, diisodecyl acid phosphate, tridecanol acid phosphate, and bis(tridecanol acid)phosphate.

3. The method of preparing a biodegradable resin according to claim 1, wherein the second group includes triphenyl phosphite, trimethyl phosphite, triethyl phosphite, diphenyl decyl phosphite, phenyl didecyl phosphite, diphenyl dodecyl phosphite, trinonyl phenyl phosphite, diphenyl isooctyl phosphite, tributyl phosphite, tripropyl phosphite, tris(monodecyl phosphite), tris(monophenyl)phosphite, and ethyl 2-cyano-3,3-diphenylacrylate.

4. The method of preparing a biodegradable resin according to claim 1, wherein the thermal stabilizer is included in the reaction in an amount ranging from 100 to 3000 ppm with respect to the total weight of a final resin.

5. The method of preparing a biodegradable resin according to claim 1, wherein, in the esterification reaction, a catalyst selected from the group consisting of magnesium acetate, stannous acetate, tetra-n-butyl titanate, lead acetate, sodium acetate, potassium acetate, antimony trioxide, N,N-dimethylaminopyridine, N-methylimidazole, and a combination thereof is included in an amount ranging from 50 to 2500 ppm with respect to the total weight of a final resin.

6. The method of preparing a biodegradable resin according to claim 1, wherein the aliphatic dicarboxylic acid is succinic acid (SA) or adipic acid (AA).

7. The method of preparing a biodegradable resin according to claim 1, wherein the compound of the first group and the compound of the second group are used in a range of a weight ratio of 1:0.5 to 1:3.

8. The method of preparing a biodegradable resin according to claim 1, wherein the polycondensation reaction is performed at a temperature range of 255 to 275 °C for 1.5 to 2.5 hours.

9. A biodegradable polymer resin prepared by any one method of claims 1 to 8.

10. The biodegradable polymer resin according to claim 9, wherein the polymer resin has an acid value of greater than 0 mg KOH/g and less than 2 mg KOH/g.

11. The biodegradable polymer resin according to claim 9, wherein the polymer resin has a chromaticity value b of equal to or greater than 0 and less than 5.

12. The biodegradable polymer resin according to claim 9, wherein the polymer resin has a molecular weight (Mw) in a range of 120,000 to 250,000.
